# EUROPEAN PATENT SPECIFICATION

(11) **EP 3 173 275 B1**
(45) Date of publication and mention of the grant of the patent: **18.07.2018**
(21) Application number: 16200488.1
(22) Date of filing: 24.11.2016
(51) Int. Cl.: B60K 13/04

(54) **TANK ARRANGEMENT STRUCTURE**
TANKANORDNUNGSSTRUKTUR
STRUCTURE D'AGENCEMENT DE RÉSERVOIR

(30) Priority: 24.11.2015 JP 2015228355
(43) Date of publication of application: 31.05.2017
(73) Proprietor: MITSUBISHI JIDOSHA KOGYO KABUSHIKI KAISHA, Tokyo 108-8410 (JP)
(72) Inventor: ITAYA, Daisuke, Tokyo, Tokyo 108-8410 (JP)
(74) Representative: Regimbeau

(56) References cited:
- EP-A1- 1 956 207
- WO-A1-2010/113818
- DE-A1-102008 020 213
- DE-A1-102010 021 572
- DE-A1-102014 110 880
- DE-T5-112012 003 817

## Description

### FIELD

The present invention relates to an arrangement structure for disposing a tank for storing an additive for purifying exhaust from a vehicle.

### BACKGROUND

One layout has been proposed in vehicles provided with a urea selective catalytic reduction (SCR) system. In this layout, a urea solution tank is disposed in the space between an outer panel and an inner panel of the vehicle. By exploiting the dead space in the vehicle width direction, it is possible to increase the capacity of the urea solution tank, without reducing the cabin space, the luggage space, and the cargo box space (refer to Japanese Laid-open Patent Publication No. 2008-273372).

In such a configuration where a urea solution tank is disposed outwardly from the vehicle relative to the inner panel, however, an external force exerted on the outer panel is easily transferred to the urea solution tank, which may compromise the integrity of pipes and connectors for urea solution. For example, a small impact on a side of a vehicle may cause a loosened connector, leading to leakage of the urea solution. In another configuration where a urea tank is disposed so as to face the vehicle compartment, a urea solution leakage may compromise the habitability and comfortability of the compartment. Besides SCR systems with urea tanks, the aforementioned issues may be experienced in SCR systems utilizing an aqueous ammonia solution or an aqueous ammonium carbonate solution. Generic DE 102014110880 A1, DE 102010021572 A1, WO 2010/113818 A1, DE 112012003817 T5, DE 102008020213 A1, and EP 1956207 A1 disclose a structure relating to a tank for storing water or solution used in a vehicle.

### SUMMARY

### TECHNICAL PROBLEMS

The present disclosure has been conceived of in light of the above-described issues, and an object thereof is to provide a tank arrangement structure which can improve the space efficiency of a vehicle, as well as improving the protection for the parts. Besides the above-described object, the present disclosure may also have other objects to provide advantageous effects that are obtained by the configurations described in the "DESCRIPTION OF EMBODIMENTS" discussed below, and that cannot be obtained by conventional techniques.

### SOLUTION TO PROBLEMS

According to the present invention, a tank arrangement structure as defined by the accompanying claims is provided.

The present application also discloses the following aspects (1) to (7).
(1) A tank arrangement structure described herein is the tank arrangement structure according to claim 1.
(2) Preferably, the tank is located at a position overlapping a rear wheel house of the vehicle when viewed from a rear. Furthermore, the tank is preferably disposed behind the rear wheel house.
(3) Preferably, the tank arrangement structure further includes a heater connector fixed to the tank, the heater connector being adapted to be connected to a heater to be contained in the tank, and a pump connector fixed to the tank, the pump connector being adapted to be connected to a pump for feeding the additive. In this case, the pipe connector is preferably fixed to the tank between the heater connector and the pump connector.
   Furthermore, preferably, a supply module attached to the bottom of the tank is provided, and the supply module is provided with the pipe connector, the heater connector, and the pump connector.
(4) Preferably, the tank includes a recess, the recess is positioned at an edge of a bottom part of the tank on a side of a vehicle compartment, and the recess is recessed inwardly toward an inside of the tank. For example, the recess preferably can be utilized as storage space.
(5) Preferably, the outer panel and the inner panel, which are disposed inside the outer panel are provided on each side of the vehicle.
(6) Preferably, a slope is provided at a part of the floor panel right below the tank, so as to be inclined downwardly toward an outside of the vehicle.
(7) Preferably, a drain hole is provided through the floor panel at an end of the floor panel.

### ADVANTAGEOUS EFFECTS

Since the tank is disposed inwardly from the outer panel through the inner panel, it is possible to dispose the tank by exploiting the space between the outer panel and the inner panel, which improves the space efficiency. Furthermore, since the pipe connector is disposed inwardly from the inner panel, it is possible to improve protection against an external force.

### BRIEF DESCRIPTION OF DRAWINGS

The nature of this invention, as well as other objects and advantages thereof, will be explained in the following with reference to the accompanying drawings, in which like reference characters designate the same or similar parts throughout the figures and wherein:

FIG. 1 is a side view of a vehicle, with a through-view of a tank of an embodiment;
FIG. 2 is a perspective view of a vehicle compartment, when a trim being an inner face of the vehicle compartment is removed;
FIG. 3 is a horizontal cross-sectional view (cross-sectional view along Line A-A in FIG. 1) of the tank; and
FIG. 4 is a vertical-sectional view (sectional view along Line B-B in FIG. 1) of the tank.

### DESCRIPTION OF EMBODIMENTS

A tank arrangement structure as an embodiment will be described with reference to the drawings. Note that the embodiment described below is merely exemplary, and it is not intended to exclude various modifications or applications that are not explicitly described. Elements of the present embodiment may be practiced in a wide variety of variations without departing from the extent of the technical concepts thereof. Furthermore, selections or omissions may be made where necessary, or various combinations are also possible.

### (1. Configuration)

A tank of the present embodiment is a urea solution tank for a vehicle 10 provided with a urea SCR system. The urea SCR system is one type of exhaust purification systems for purifying nitrogen oxides (NOx) contained in exhaust gases from engines. In urea SCR systems, urea solution is jetted upstream to a NOx selective reduction catalyst provided on an exhaust passage for hydrolyzing urea into ammonia, which acts as a reductant to reduce NOx to nitrogen on the catalyst. Urea SCR systems in this type are widely used for automobiles, working machines, ships and boats, power plants, and the like, having diesel or lean burn engines.

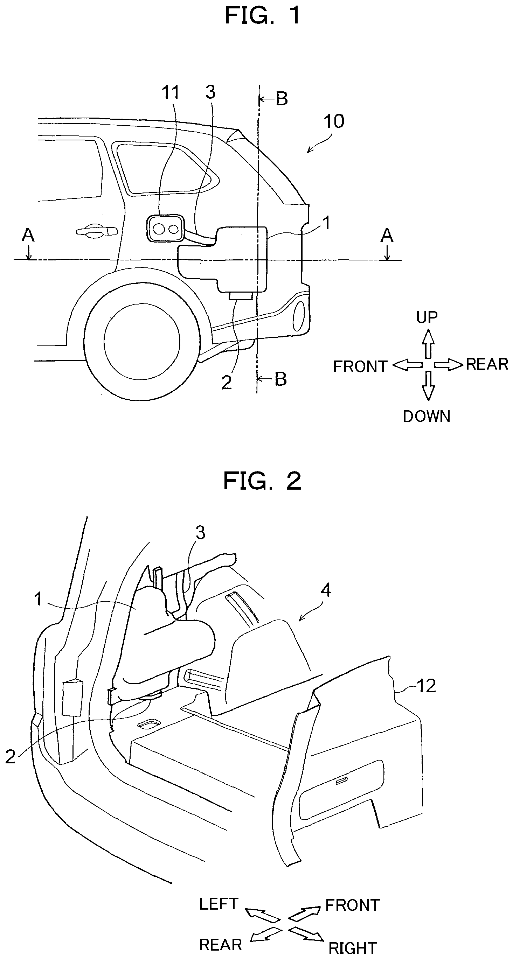

The urea solution tank shown in FIG. 1 includes a tank main body 1 (tank), a supply module 2, and a water feed hose 3, and the tank is housed inside the left rear fender of the vehicle 10. The tank main body 1 is a vessel adapted to store an additive (aqueous urea solution) for purifying the exhaust from the vehicle 10, and has a flat configuration in the vehicle width direction. Here, the vehicle 10 is shown in FIG. 2, when a trim 12 is removed from the left side of the luggage space. The tank main body 1 is sized so as to be accommodated at a position overlapping the rear wheel house 4 when viewed from the rear, behind the rear wheel house 4 of the vehicle 10, and is disposed at that position. In this manner, since the tank main body 1 has a shape corresponding to the empty space behind the rear wheel house 4, the tank main body 1 does not extend to the vehicle compartment beyond the rear wheel house 4, which ensures the habitability of the vehicle compartment.

The supply module 2 is a complex of parts for feeding the urea solution stored in the tank main body 1 to the exhaust system (e.g., a urea solution injector provided on the exhaust passage), and is attached to the bottom of the tank main body 1. The supply module 2 includes various parts, such as a pump for feeding the urea solution to the urea solution injector, a heater for raising the temperature of the urea solution to an appropriate temperature, a filter for removing foreign objects in the urea solution, a temperature sensor for detecting the temperature of the urea solution, and a residual sensor for determining how much urea solution is remained in the tank. Therefore, pipes and a pump for feeding the urea solution, electric wires for energizing the heater, signal lines for propagating sensor detection signals, are connected to the supply module 2.

The water feed hose 3 is a hollow pipe used to replenish the urea solution into the tank main body 1. As shown in FIG. 1, on the left side of the vehicle 10, an inlet 11 is provided which includes two ports aligned side by side: a fuel filler port for replenishing fuel into the vehicle 10, and a solution filler port for feeding urea solution. The water feed hose 3 is arranged to connect the solution filler port for the urea solution and the tank main body 1. Note that the tank main body 1 is configured to have a capacity that is sufficiently greater than the assumed volume of urea solution that is stored at the maximum level in the tank main body 1. Therefore, the water feed hose 3 is not necessarily connected to the top of the tank main body 1.

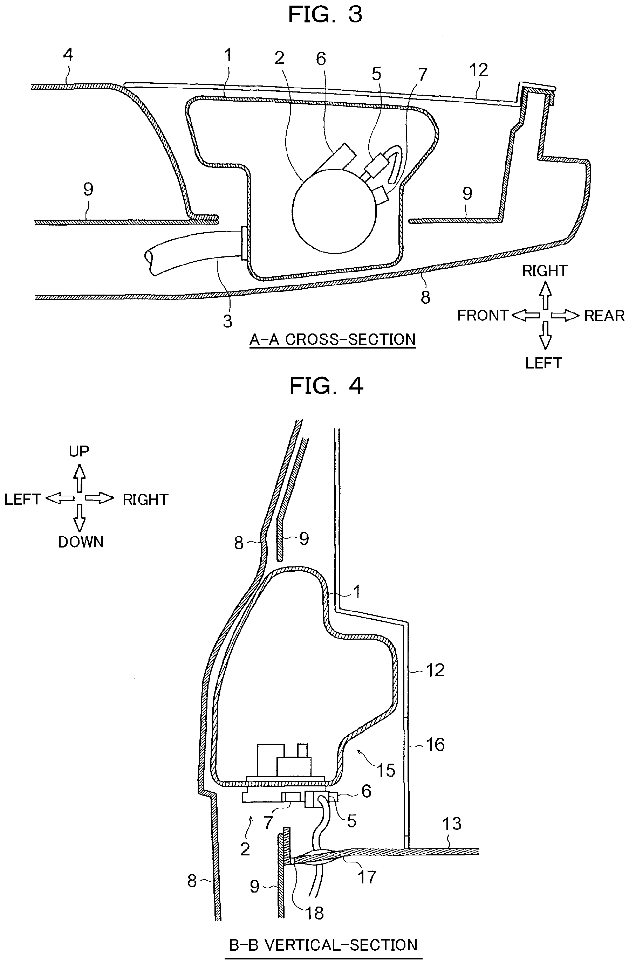

FIGS. 3 and 4 show the horizontal and vertical cross-sectional views of the tank main body 1, respectively. An outer panel 8 and an inner panel 9 disposed inside the outer panel 8, are provided on each side of the vehicle 10. The outer panel 8 is facing panel. The outer panel 8 and the inner panel 9 are joined together by coupling flanges formed on the respective edges of the panels. The tank main body 1 is disposed so as to partially protrude outwardly from the vehicle 10 relative to the inner panel 9. In other words, the inner panel 9 has an opening that has a shape corresponding to a the shape (cross-sectional profile) of the tank main body 1, and the tank main body 1 is fixed to the inner panel 9 so as to protrude outwardly from the vehicle 10 through that opening. Hence, the tank main body 1 is disposed inside the outer panel 8 of the vehicle 10 through the inner panel 9.

The supply module 2 is provided with a pipe connector 5, a heater connector 6, and a pump connector 7. The pipe connector 5 is a coupler member for connecting a pipe for feeding urea solution. The heater connector 6 is a socket for connecting a feed line for energizing the heater, and the pump connector 7 is a socket for connecting a feed line for operating the pump. As shown in FIGS. 3 and 4, the supply module 2 is arranged such that the pipe connector 5 is disposed between the heater connector 6 and the pump connector 7 on the top view.

The above-described connectors 5-7 are disposed at a position inward from the inner panel 9 on the top view and on the side view. As used therein, the language "inward from the inner panel 9" refers to the inside of the vehicle 10 relative to the opening of the inner panel 9 through which the tank main body 1 is disposed. As a result, even when there is a small impact on the side of the vehicle 10, the outer panel 8 is prevented from directly contact the connectors 5-7, thereby providing sufficient protection for the connectors 5-7.

As shown in FIG. 4, the tank main body 1 includes a recess 15 that is positioned at the edge of a bottom part of the tank main body 1 on the side of the vehicle compartment, and the recess 15 is recessed inwardly toward the tank main body 1. A tool door 16 is attached to the position of the trim 12 corresponding to the recess 15. The tool door 16 can be opened or closed from the vehicle compartment of the vehicle 10. The space provided by the recess 15 may be utilized as space for storing a jack and a tool bag used for maintenance of the vehicle 10.

A slope 17 is provided at a part of the floor panel 13 of the vehicle 10 right under the tank main body 1 and the supply module 2, so as to be inclined downwardly toward the outside of the vehicle 10, and the slope 17 is attached to the inner panel 9. Drain holes 18 are provided through the slope 17, on the vehicle compartment sides relative to the junction with the inner panel 9. The slope 17 and the drain holes 18 are structures for draining leaked urea solution out of the vehicle 10, in the case when the pipe connector 5 is deformed or damaged, leading to leakage of the urea solution. As a result, the leaked urea solution is prevented from flowing to the vehicle compartment (inside the trim 12), and adherence to a white deposit of urea is suppressed.

### (2. Advantages and Effects)

(1) In the above-described urea SCR system, the tank main body 1 of the urea tank is disposed through the inner panel 9 inside the outer panel 8. As a result, it is possible to increase the capacity of the tank by exploiting the space near the vehicle compartment relative to the inner panel 9, in addition to the space between the outer panel 8 and the inner panel 9, which improves the space efficiency. Furthermore, since the pipe connector 5 of the supply module 2 attached to the tank main body 1 is provided inwardly from the inner panel 9, it is possible to reduce the risk of the pipe connector 5 contacting to the outer panel 8, upon an application of an external force. Hence, it is possible to improve the protection against an external force.
   Furthermore, since the tank main body 1 is disposed above the floor panel 13, the tank main body 1 is substantially enclosed "indoor". As a result, since a risk of any damage to the tank main body 1 caused by chipping (flying stones from the road) is eliminated, it is possible to improve the protection for the urea solution tank. Furthermore, since the water feed hose 3 is connected to the tank main body 1, it is possible to replenish urea solution from the outside of the vehicle 10 (the solution filler port of the inlet 11), which conveniently eliminates the necessity of water supply from the vehicle compartment side. Since there is no heat source (e.g., an engine and a muffler of the vehicle 10) near the tank main body 1, any damages by heat, such as malfunction of the supply module 2 or corrosion of the tank main body 1, can be suppressed.
(2) In the above-described urea SCR system, since the tank main body 1 is disposed so as to overlap the rear wheel house 4 when viewed from the rear, the tank main body 1 does not extend to the vehicle compartment, which further improves the space efficiency. As shown in FIG. 3, it is possible to configure the surface of the trim 12 to be substantially flat relative to the part of the rear wheel house 4 extending furthest to the vehicle compartment. Accordingly, it is possible to provide wider vehicle compartment space, which improves the habitability and comfortability of the vehicle compartment.
(3) As shown in FIG. 3, since the pipe connector 5 of the supply module 2 is disposed between the heater connector 6 and the pump connector 7, it is possible to protect the pipe connector 5 by the heater connector 6 and the pump connector 7. As a result, protection for the pipe connector 5 is further improved.
(4) As shown in FIG. 4, the recess 15 is provided to the bottom part of the tank main body 1. The tool door 16 is provided on the surface of the trim 12, at the position corresponding to the recess 15. As a result, storage space that is easily accessible from the vehicle compartment can be provided, which enhances the convenience.

Furthermore, the slope 17 is provided to the floor panel 13 right below the tank main body 1, so as to be inclined downwardly toward the outside of the vehicle 10. Hence, even when urea solution leaks from the tank main body 1, the leaked urea solution is prevented from flowing into the trim 12. The leaking urea solution is drained through the drain holes 18 provided at the left and right edges of the floor panel 13.

### (3. Modification)

The aforementioned embodiment has been described with reference to the example where all of the connectors 5-7 are positioned inwardly from the inner panel 9, as shown in FIG. 3. Among the connectors 5-7, the pipe connector 5 is the most susceptible to a deformation or damage by an external force. Or, some types of the supply module 2 may have no heater connector 6 or pump connector 7. In such configurations, it is possible to improve protection against an external force by disposing at least the pipe connector 5 inside the inner panel 9.

While the aforementioned embodiment has been described with reference to the example where the urea solution tank is disposed inside the left rear fender of the vehicle 10, as shown in FIG. 1, the particular locations of the urea solution tank is not limited to that example. For example, the urea solution tank may be disposed inside the front fender of the vehicle 10, or the urea solution tank may be integrated with a door. Advantages similar to those provided by the aforementioned embodiment can also be achieved, by at least disposing the tank main body 1 through the inner panel 9 inside the outer panel 8, and disposing the connectors 5-7 inward from the inner panel 9.

Since there is another rear wheel house 4 on the right side of the vehicle 10, the tank main body 1 may be disposed inside the right rear fender. Alternatively, the tank main body 1 may be split into two, and the respective tank main bodies 1 may be disposed to the left and right rear side of the rear wheel house 4. In this configuration, it is possible to provide sufficient tank capacity, in addition to exploiting empty space on the both rear sides of the rear wheel house 4, which further enhances the habitability of the vehicle compartment.

The invention thus described, it will be obvious that the same may be varied in many ways as defined by the following claims.

### REFERENCE SIGNS LIST

- 1: TANK MAIN BODY (TANK)

- 2: SUPPLY MODULE
- 3: WATER FEED HOSE
- 4: REAR WHEEL HOUSE
- 5: PIPE CONNECTOR
- 6: HEATER CONNECTOR
- 7: PUMP CONNECTOR
- 8: OUTER PANEL
- 9: INNER PANEL
- 10: VEHICLE
- 11: INLET
- 12: TRIM
- 13: FLOOR PANEL
- 15: RECESS
- 16: TOOL DOOR
- 17: SLOPE
- 18: DRAIN HOLE

## Claims

1. A tank arrangement structure for disposing, inside a vehicle (10) having an outer panel (8) and an inner panel (9), a tank (1) adapted to store an additive for purifying an exhaust gas from the vehicle (10),
the tank arrangement structure comprising a pipe connector (5), the pipe connector (5) being adapted to be connected to a pipe for feeding the additive stored in the tank (1) to an exhaust system, the pipe connector (5) being fixed to the tank (1) at a position inward from the inner panel (9),
**characterized in that**
the tank (1) is located above a floor panel (13) of the vehicle (10) and disposed inwardly from the outer panel (8) of the vehicle (10) through the inner panel (9), the tank main body being substantially enclosed "indoor".

2. The tank arrangement structure according to claim 1,
**characterized in that**
the tank (1) is located at a position overlapping a rear wheel house (4) of the vehicle (10) when viewed from a rear.

3. The tank arrangement structure according to claim 1 or 2,
**characterized in that**
the tank arrangement structure further comprises:
a heater connector (6) fixed to the tank (1), the heater connector (6) being adapted to be connected to a heater to be contained in the tank (1); and
a pump connector (7) fixed to the tank (1), the pump connector (7) being adapted to be connected to a pump for feeding the additive, and
the pipe connector (5) is fixed to the tank (1) between the heater connector (6) and the pump connector (7).

4. The tank arrangement structure according to any one of claims 1-3,
**characterized in that**
the tank (1) comprises a recess (15), the recess (15) being positioned at an edge of a bottom part of the tank (1) on a side of a vehicle compartment, and the recess (15) is recessed inwardly toward an inside of the tank (1).

5. The tank arrangement structure according to any one of claims 1-4,
**characterized in that**
a slope (17) is provided at a part of the floor panel (13) right below the tank (1), so as to be inclined downwardly toward an outside of the vehicle (10).

6. The tank arrangement structure according to claim 5,
**characterized in that**
a drain hole (18) is provided through the floor panel (13) at an end of the floor panel (13).

7. The tank arrangement structure according to any one of claims 1-6, **characterized in that** the outer panel (8) and the inner panel (9) which are disposed inside the outer panel (8) are provided on each side of the vehicle (10).

## Patentansprüche

1. Tankanordnungsstruktur zum Anordnen, im Inneren eines Fahrzeugs (10) aufweisend eine äußere Tafel (8) und eine innere Tafel (9), eines für Speichern eines Zusatzmittels zur Reinigung eines Abgases vom Fahrzeug (10) angepassten Tanks (1),
wobei die Tankanordnungsstruktur ein Rohrverbindungsstück (5) umfasst, das Rohrverbindungsstück (5) angepasst ist, um mit einem Rohr zum Zuführen des im Tank (1) gespeicherten Zusatzmittels zu einem Abgassystem verbunden zu werden, wobei der Rohrverbinder (5) am Tank (1) in einer von der inneren Tafel (9) nach innen gerichteten Position befestigt ist,
**dadurch gekennzeichnet, dass**
der Tank (1) oberhalb einer Bodenplatte (13) des Fahrzeugs (10) platziert und nach innen von der äußeren Tafel (8) des Fahrzeugs (10) durch die innere Tafel (9) angeordnet ist, wobei der Tank-Hauptteil im Wesentlichen im "Inneren" eingeschlossen ist.

2. Tankanordnungsstruktur nach Anspruch 1,
**dadurch gekennzeichnet, dass**
der Tank (1) an einer Position angeordnet ist, die, von hinten betrachtet, ein hinteres Radhaus (4) des Fahrzeugs (10) überlappt.

3. Tankanordnungsstruktur nach Anspruch 1 oder 2,
**dadurch gekennzeichnet, dass**
die Tankanordnungsstruktur ferner aufweist:
einen Heizvorrichtungsverbinder (6), der am Tank (1) befestigt ist, wobei der Heizvorrichtungsverbinder (6) angepasst ist, um mit einer Heizvorrichtung verbunden zu werden, der im Tank (1) anzuordnen ist; und
ein am Tank (1) befestigtes Pumpenverbindungsstück (7), wobei das Pumpenverbindungsstück (7) angepasst ist, um mit einer Pumpe zum Zuführen des Zusatzmittels verbunden zu sein, und
das Rohrverbindungsstück (5) am Tank (1) zwischen dem Heizvorrichtungsverbinder (6) und dem Pumpenverbindungsstück (7) befestigt ist.

4. Tankanordnungsstruktur nach einem der Ansprüche 1 bis 3,
**dadurch gekennzeichnet, dass**
der Tank (1) eine Vertiefung (15) aufweist, wobei die Vertiefung (15) an einer Kante eines Bodenteils des Tanks (1) auf einer Seite eines Fahrzeugraums positioniert ist, und die Vertiefung (15) nach innen zu einer Innenseite des Tanks (1) hin vertieft ist.

5. Tankanordnungsstruktur nach einem der Ansprüche 1 bis 4,
**dadurch gekennzeichnet, dass**
eine Abschrägung (17) an einem Teil der Bodenplatte (13) direkt unterhalb des Tanks (1) so vorgesehen ist, dass sie nach unten in Richtung einer Außenseite des Fahrzeugs (10) geneigt ist.

6. Tankanordnungsstruktur nach Anspruch 5,
**dadurch gekennzeichnet, dass**
eine Ablauföffnung (18) durch die Bodenplatte (13) an einem Ende der Bodenplatte (13) vorgesehen ist.

7. Tankanordnungsstruktur nach einem der Ansprüche 1 bis 6, **dadurch gekennzeichnet, dass** die äußere Tafel (8) und die innere Tafel (9), die auf der Innenseite der äußeren Tafel (8) angeordnet ist, auf jeder Seite des Fahrzeugs (10) bereitgestellt sind.

## Revendications

1. Structure d'agencement de réservoir pour disposer, à l'intérieur d'un véhicule (10) ayant un panneau externe (8) et un panneau interne (9), un réservoir (1) adapté pour stocker un additif pour purifier un gaz d'échappement du véhicule (10),
la structure d'agencement de réservoir comprenant un connecteur de tuyau (5), le connecteur de tuyau (5) étant adapté pour être raccordé à un tuyau pour amener l'additif stocké dans le réservoir (1) à un système d'échappement, le connecteur de tuyau (5) étant fixé au réservoir (1) dans une position vers l'intérieur à partir du panneau interne (9),
**caractérisée en ce que** :
le réservoir (1) est positionné au-dessus d'un panneau de plancher (13) du véhicule (10) et disposé vers l'intérieur à partir du panneau externe (8) du véhicule (10) à travers le panneau interne (9), le corps principal de réservoir étant sensiblement enfermé « à l'intérieur ».

2. Structure d'agencement de réservoir selon la revendication 1,
**caractérisée en ce que** :
le réservoir (1) est positionné dans une position recouvrant un passage de roue arrière (4) du véhicule (10) lorsqu'il est observé depuis l'arrière.

3. Structure d'agencement de réservoir selon la revendication 1 ou 2,
**caractérisée en ce que** :
la structure d'agencement de réservoir comprend en outre :
un connecteur de dispositif de chauffage (6) fixé au réservoir (1), le connecteur de dispositif de chauffage (6) étant adapté pour être raccordé à un dispositif de chauffage destiné à être contenu dans le réservoir (1) ; et
un connecteur de pompe (7) fixé au réservoir (1), le connecteur de pompe (7) étant adapté pour être raccordé à une pompe pour fournir l'additif, et
le connecteur de tuyau (5) est fixé au réservoir (1) entre le connecteur de dispositif de chauffage (6) et le connecteur de pompe (7).

4. Structure d'agencement de réservoir selon l'une quelconque des revendications 1 à 3,
**caractérisée en ce que** :
le réservoir (1) comprend un évidement (15), l'évidement (15) étant positionné au niveau d'un bord d'une partie inférieure du réservoir (1) sur un côté du compartiment de véhicule, et l'évidement (15) est enfoncé vers l'intérieur vers un intérieur du réservoir (1).

5. Structure d'agencement de réservoir selon l'une quelconque des revendications 1 à 4,
**caractérisée en ce que** :
une inclinaison (17) est prévue au niveau d'une partie du panneau de plancher (13) juste au-dessous du réservoir (1), afin d'être inclinée vers le bas vers un extérieur du véhicule (10).

6. Structure d'agencement de réservoir selon la revendication 5,
**caractérisée en ce que** :
un trou de drain (18) est prévu à travers le panneau de plancher (13) au niveau d'une extrémité du panneau de plancher (13).

7. Structure d'agencement de réservoir selon l'une quelconque des revendications 1 à 6, **caractérisée en ce que** le panneau externe (8) et le panneau interne (9) qui sont disposés à l'intérieur du panneau externe (8), sont prévus de chaque côté du véhicule (10).
